# EUROPÄISCHE PATENTSCHRIFT

(11) **EP 3 829 848 B1**
(45) Veröffentlichungstag und Bekanntmachung des Hinweises auf die Patenterteilung: **18.01.2023**
(21) Anmeldenummer: 19749229.1
(22) Anmeldetag: 18.07.2019
(51) Int. Cl.: B29C 45/17

(54) **PLASTIFIZIEREINHEIT, SPRITZEINHEIT UND SPRITZGIESSMASCHINE**
PLASTICIZING UNIT, INJECTION UNIT AND INJECTION MOULDING MACHINE
UNITÉ DE PLASTIFICATION, UNITÉ D'INJECTION ET MACHINE DE MOULAGE PAR INJECTION

(30) Priorität: 30.07.2018 DE 102018118376
(43) Veröffentlichungstag der Anmeldung: 09.06.2021
(73) Patentinhaber: KraussMaffei Technologies GmbH, 80997 München (DE)
(72) Erfinder: FIEDERLE, Ralf, 88260 Eglofs (DE); ROICK, Matthias, 82110 Germering (DE); SCHNEIDER, Udo, 81249 München (DE); RADOS, Ivan, 82140 Olching (DE); SACHER, Oliver, 86415 Mering (DE); KONNERTH, Uwe, 81371 München (DE)
(74) Vertreter: Wilhelm, Ludwig
(86) Internationale Anmeldenummer: PCT/EP2019/069319
(87) Internationale Veröffentlichungsnummer: WO 2020/025331

(56) Entgegenhaltungen:
- CN-U- 204 687 230
- CN-U- 204 800 937
- DD-A1- 134 614
- DD-A5- 288 350
- DE-U1-202006 012 268
- JP-A- H06 198 676
- US-A1- 2011 151 048
- Richard Henry: "Extruder Barrel Alignment", , 15. August 2015 (2015-08-15), Seiten 1-12, XP055644691, Gefunden im Internet: URL:http://32sceu2lutxd3gqs9m34vh0p.wpengi ne.netdna-cdn.com/wp-content/uploads/2016/ 02/Extruder-Alignment-Paper-2015.pdf [gefunden am 2019-11-20]

## Beschreibung

Die Erfindung betrifft eine Plastifiziereinheit für eine Spritzeinheit einer Spritzgießmaschine, mit einem Zylinder und einer darin drehbaren und in axialer Richtung bewegbaren Schnecke.

Die DE 20 2006 012268 U1 stellt den nächstliegenden Stand der Technik dar und offenbart eine Vorrichtung zur Quereinstellung bzw. Querjustierung einer Plastifizierzylinderspitze in Bezug auf eine horizontale Ebene. Über Schrauben kann eine horizontale Justierung vorgenommen werden, wobei sich ein Abstützklotz in Querrichtung zur Spritzachse bewegt. Im Abstützklotz ist eine Einstellschraube angeordnet, welche oben und unten je ein Links- bzw. Rechtsgewinde bzw. aufweist. Durch Drehen der Einstellschraube wird der ganze Zylinderkopfbereich angehoben oder abgesenkt. Die Vorrichtung zur Quereinstellung bzw. Querjustierung stützt das dem Zylinder abgewandten Ende des Tragelements, umgibt das Ende des Tragelements jedoch nicht.

Bei einer Spritzgießmaschine kann es von Zeit zu Zeit erforderlich sein, die Plastifiziereinheit zu wechseln. Aus der DE3637885A1 ist eine Spritzgießanlage mit auswechselbarer Plastifiziereinheit bekannt. Um die Umrüstzeiten auf ein Minimum zu verkürzen, ist eine Vorwärmstation vorgesehen, in der die Plastifiziereinheiten an einen Versorgungsanschluss angeschlossen sind und unter Betriebsbedingungen vorgewärmt werden können. Zum raschen und vorzugsweise automatischen Befestigen bzw. Lösen der Plastifiziereinheiten in der Spritzstation bzw. in der Vorwärmstation sind jeweils eine muldenförmige Aufnahme und Spannvorrichtungen mit Keilen, die mit entsprechenden Keilflächen an der Plastifiziereinheit axial und radial zusammenwirken, vorgesehen.

Problematisch bei einem Wechsel der Plastifiziereinheit gestaltet sich die Einstellung der Düsenmitte. Diese muss exakt auf die Angußbuchse der düsenseitigen Spritzgießwerkzeughälfte ausgerichtet sein. Hierzu ist es erforderlich, dass die Düsenmitte im Zentrierring an der feststehenden Formaufspannplatte mittig ausgerichtet ist. Um dies bewerkstelligen zu können, muss ein gewisser Aufwand betrieben werden. Insbesondere muss das Spritzgießwerkzeug zunächst ausgebaut werden, damit zwischen den Formaufspannplatten genügend Platz für eine Bedienperson zur Verfügung steht, die aus dem Inneren der Schließeinheit auf die Düsenspitze schauen und diese im Zentrierring mittig ausrichten kann. Nach erfolgter Einstellung muss das Spritzgießwerkzeug wieder eingebaut werden. Dies kann pro Wechsel einer Plastifiziereinheit mehrere Stunden in Anspruch nehmen.

Ausgehend hiervon liegt der Erfindung die Aufgabe zugrunde, eine Plastifiziereinheit anzugeben, die einen einfachen und zeitsparenden Wechsel der Plastifiziereinheit ermöglicht und wobei die Düsenmitte nur einmal pro Plastifiziereinheit eingestellt werden muss.

Die Lösung dieser Aufgabe erfolgt durch eine Plastifiziereinheit mit den Merkmalen von Anspruch 1. Vorteilhafte Ausgestaltungen und Weiterentwicklungen finden sich in den abhängigen Ansprüchen.

Dadurch, dass ein Fixierelement das dem Zylinder abgewandte Ende des Tragelements des Zylinders umgibt, derart, dass ein Abstand zwischen dem Fixierelement und dem Tragelement vorliegt, und dass zwischen dem Fixierelement und dem Tragelement mehrere Stellelemente vorgesehen sind, welche dazu ausgebildet sind, eine kraft- und/oder formschlüssige Verbindung zwischen dem Fixierelement und dem Tragelement erzeugen und die Position des Tragelements relativ zu dem Fixierelement in einer Ebene orthogonal zur Zylinderachse einstellen zu können, ist die Düsenmitte für eine solche Plastifiziereinheit nur ein einziges Mal einzustellen. Beim Wechsel der Plastfiziereinheit verbleibt das Fixierelement an der Plastifiziereinheit und somit bleibt auch die mittels der Stellelemente einmal vorgenommene Einstellung der Düsenmitte erhalten.

Es sind drei Stellelemente vorgesehen und wie nachfolgend beschrieben angeordnet. Ein erstes Stellelement liegt mit seiner Symmetrieachse in der vertikalen und die Zylinderachse enthaltenden Ebene, wobei dieses erste Stellelement unterhalb des Tragelements angeordnet und für eine Einstellung der Position des Tragelements relativ zu dem Fixierelement in vertikaler Richtung ausgebildet ist. Ferner sind zwei weitere Stellelemente vorgesehen, deren Symmetrieachsen in einer vertikalen Ebene liegen, welche orthogonal zur Zylinderachse liegt, wobei auf jeder Seite der vertikalen und die Zylinderachse enthaltenden Ebene jeweils eines der zwei weiteren Stellelemente angeordnet und für eine Einstellung der Position des Tragelements relativ zu dem Fixierelement in horizontaler Richtung ausgebildet ist. Vorzugsweise können die Symmetrieachsen aller drei Stelleelemente in einer Ebene orthogonal zur Zylinderachse angeordnet sein. Ferner können die Symmetrieachsen der zwei weiteren Stellelemente vorzugsweise auf einer gemeinsamen Achse liegen.

In Weiterbildung der Erfindung kann vorgesehen sein, dass das Fixierelement in einer Ebene orthogonal zur Zylinderachse im Wesentlichen einen rechteckförmigen und nach oben offenen Querschnitt aufweist, insbesondere nach Art eines U-Profils, bzw. einen U-förmigen Querschnitt, mit zwei Seitenteilen und einem ebenen bzw. geraden Bodenteil. Damit kann das Fixierelement mit seinen Seitenwänden zwischen den Spannelementen eines Spann- und Positioniersystemen eingespannt und in seiner Lage fixiert werden.

Ferner kann das Tragelement an seinem unteren Ende, welches über die Stellelemente mit dem Fixierelement in Verbindung steht, vorzugsweise analog zu dem Fixierelement gestaltet sein und zwar in der Weise, dass ein Endabschnitt des Tragelements in das Fixierelement hineinragt.

Die Erfindung betrifft darüber hinaus eine Spritzeinheit mit einer erfindungsgemäßen Plastifiziereinheit und mit einer Antriebseinheit, umfassend einen Dreh- und einen Linearantrieb für die Schnecke, wobei die Plastifiziereinheit lösbar mit der Antriebseinheit verbindbar oder verbunden ist. Gemäß einem Aspekt der Erfindung kann eine Trägerplatte vorgesehen sein, auf der das Fixierelement bzw. die Plastifiziereinheit mit ihrem Fixierelement abstützbar ist und auf der ein Spann- und Positioniersystem vorgesehen ist, welches dazu ausgebildet ist, das auf der Trägerplatte abgestützte Fixierelement einzuspannen und in seiner Lage zu fixieren. Gemäß einer bevorzugten Ausführungsform kann eine Linearführung für die Trägerplatte vorgesehen sein.

Ferner können zwischen der Trägerplatte einerseits und der Unterseite des Fixierelements andererseits Führungselemente vorgesehen sein, die derart ausgebildet sind und zusammenwirken, dass das Fixierelement in Längsrichtung der Spritzeinheit lagefixiert und orthogonal zur Zylinderachse auf der Trägerplatte verschiebbar ist. Dadurch wird das erste Ausrichten der Plastifiziereinheit in dem Spann- und Positioniersystem erleichtert.

Die Erfindung betrifft schließlich auch eine Spritzgießmaschine mit einem Maschinenbett, einer Schließeinheit und einer erfindungsgemäßen Spritzeinheit bzw. einer Spritzeinheit mit einer erfindungsgemäßen Plastifiziereinheit, wobei die Trägerplatte der Spritzeinheit in Maschinenlängsrichtung verschiebbar auf oder in dem Maschinenbett abgestützt ist, vorzugsweise mittels geeigneter Linearführungen. Eine Linearführung kann beispielsweise eine Führungsschiene mit einem geeigneten Querschnitt und hierzu passenden Führungswagen sein, wobei die Führungswagen an der Unterseite der Trägerplatte befestigt sind.

Nachfolgend soll die Erfindung anhand eines Ausführungsbeispiels und unter Bezugnahme auf die Figuren 1 bis 16 näher beschrieben werden.

Es zeigen:
- Fig.1: Spritzgießmaschine in Seitenansicht
- Fig.2: Frontansicht der Spritzeinheit
- Fig.3: Spann- und Positioniersystem in geschlossenem Zustand
- Fig.4: Spann- und Positioniersystem in geöffnetem Zustand
- Fig.5 - 12: Darstellung der Schritte beim ersten Einrichten der Plastifiziereinheit
- Fig.13 - 16: Darstellung der Schritte beim Wechsel der Plastifiziereinheit

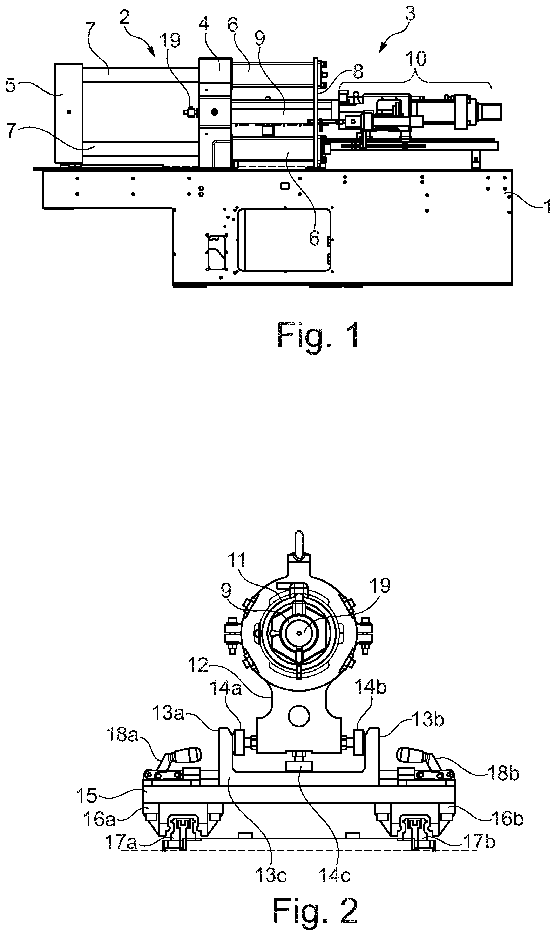

Die in Figur 1 in Seitenansicht gezeigte Spritzgießmaschine umfasst ein Maschinenbett 1, eine Schließeinheit 2 und eine Spritzeinheit 3. Die Schließeinheit 2 umfasst eine feststehende Formaufspannplatte 4, eine bewegliche Formaufspannplatte 5, vier Schließzylinder 6 und vier Säulen 7, welche mit der beweglichen Formaufspannplatte 5 verbunden sind und in die Schließzylinder 6 hineinragen und dort ein als Kolben ausgebildetes Ende aufweisen. In der Figur 1 sind nur die vorderen Schließzylinder und die vorderen Säulen zu sehen. Die jeweils auf einer Seite der Spritzeinheit 3 liegenden oberen und unteren Schließzylinder sind mittels Stützplatten 8 untereinander verbunden und auf dem Maschinenbett 1 abgestützt. Die Spritzeinheit 3 umfasst eine erfindungsgemäße Plastifiziereinheit 9 mit einer Düse 19 und eine Antriebseinheit 10, umfassend einen Dreh- und einen Linearantrieb, welche an sich bekannt sind und daher nicht näher beschrieben werden müssen.

Die Figur 2 zeigt eine Frontalansicht der Figur 1 auf die Spritzeinheit 3. Die Plastifiziereinheit 9 umfasst einen Zylinder 11 und eine darin drehbare und in axialer Richtung bewegbare Schnecke (nicht dargestellt). Am vorderen Ende der Plastifiziereinheit 9 befindet sich die Düse 19. Unterhalb des Zylinders 11 ist ein Tragelement 12 angeordnet und mit dem Zylinder 11 verbunden. Das untere Ende des Tragelements 12 ist im Wesentlichen rechteckförmig ausgebildet und von einem Fixierelement 13 umgeben. Das Fixierelement 13 weist in einer Ebene orthogonal zur Zylinderachse im Wesentlichen einen rechteckförmigen und nach oben offenen Querschnitt auf, insbesondere nach Art eines U-Profils mit zwei Seitenteilen 13a und 13b und einem ebenen bzw. geraden Bodenteil 13c. Zwischen dem Trageelement 12 und dem Fixierelement 13 sind drei Stellelemente 14a, 14b und 14c vorgesehen.

Die drei Stellelemente 14a, 14b und 14c sind in einer Ebene orthogonal zur Zylinderachse liegend angeordnet, wobei das Stellelement 14c unterhalb des Tragelements 14 angeordnet ist und mit dem Bodenteil 13c des Fixierelements in Kontakt steht oder mit diesem verbunden ist. Dieses Stellelement 14c ist für eine Einstellung der Position des Tragelements 12 relativ zu dem Fixierelement 13 in vertikaler Richtung ausgebildet. Die Symmetrieachse des Stellelements 14c liegt vorzugsweise in einer vertikalen und die Zylinderachse enthaltenden Ebene. Auf jeder Seite einer vertikalen und die Zylinderachse enthaltenden Ebene ist jeweils ein weiteres Stellelement 14a und 14b angeordnet. Diese Stellelemente 14a und 14b sind seitlich des Tragelements 12 angeordnet und auf die Seitenteile 13a und 13b des Fixierelements 13 ausgerichtet. Die Stelleelemente 14a und 14b sind für eine Einstellung der Position des Tragelements 12 relativ zu dem Fixierelement 13 in horizontaler Richtung ausgebildet.

Die Plastifiziereinheit 9 ist mit ihrem Fixierelement 13 auf einer Trägerplatte 15 abgestützt. Die Trägerplatte 15 ist mittels Führungswagen 16a und 16b auf Führungsschienen 17a, 17b abgestützt und in Maschinenlängsrichtung verfahrbar.

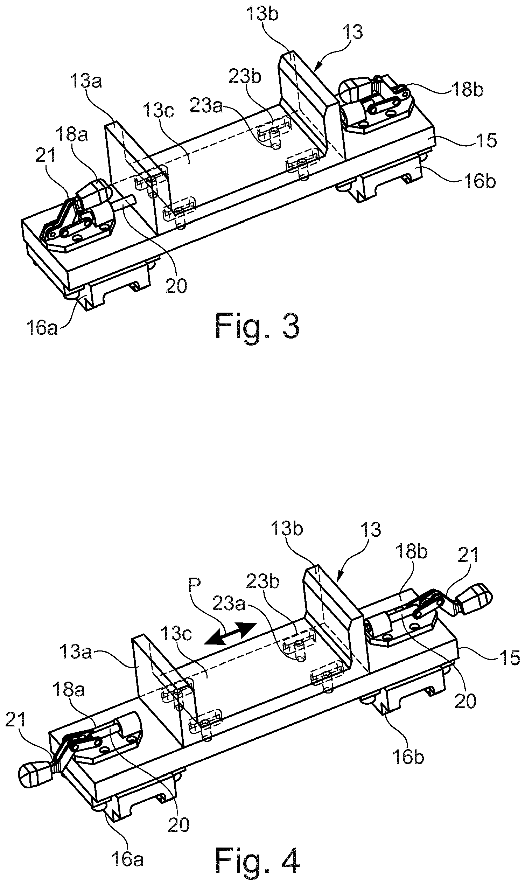

Auf der Oberseite der Trägerplatte 15 ist ein Spann- und Positioniersystem angebracht, welches gemäß dem vorliegenden Ausführungsbeispiel aus zwei Spannelementen 18a und 18b besteht. Zu beiden Seiten des Fixierelements 13 ist jeweils ein Spannelement 18a bzw. 18b angebracht, welches unter Verweis auf die Figuren 3 und 4 näher beschrieben werden soll. Die Spannelemente 18a und 18b sind in der Figur 3 in der geschlossenen Stellung und in der Figur 4 in der geöffneten Stellung dargestellt. In der geöffneten Stellung gemäß der Figur 4 ist das Fixierelement 13 orthogonal zur Zylinderachse verschiebbar. Dieses Spiel soll mit dem Pfeil P angedeutet werden. In der geschlossenen Stellung gemäß der Figur 3 ist das Fixierelement in seiner Lage fixiert und zwischen den Spannelementen 18a und 18b fest eingeklemmt. Mittels geeigneter Führungselemente kann sichergestellt werden, dass das Fixierelement 13 lediglich orthogonal zur Zylinderachse verschiebbar ist, wohingegen es in Längsrichtung der Spritzeinheit lagefixiert ist. Die Führungselemente können beispielsweise in der Weise ausgebildet sein, dass auf der Oberseite der Trägerplatte 15 mehrere Führungsstifte 23a vorgesehen sind, die im Eingriff mit hierzu passend ausgebildeten Führungsnuten 23b auf der Unterseite des Fixierelements 13 stehen.

Die Spannelemente des Spann- und Positioniersysteme können in vielfältiger Weise ausgebildet sein. Gemäß dem vorliegenden Ausführungsbeispiel ist jedes der Spannelemente 18a, 18b als ein Hebelsystem ausgebildet und umfasst jeweils einen Spannbolzen 20, der mittels eines Spannhebels 21 zwischen einer eingefahrenen Position gemäß Figur 4 und einer ausgefahrenen Position gemäß Figur 3 hin- und her bewegbar ist.

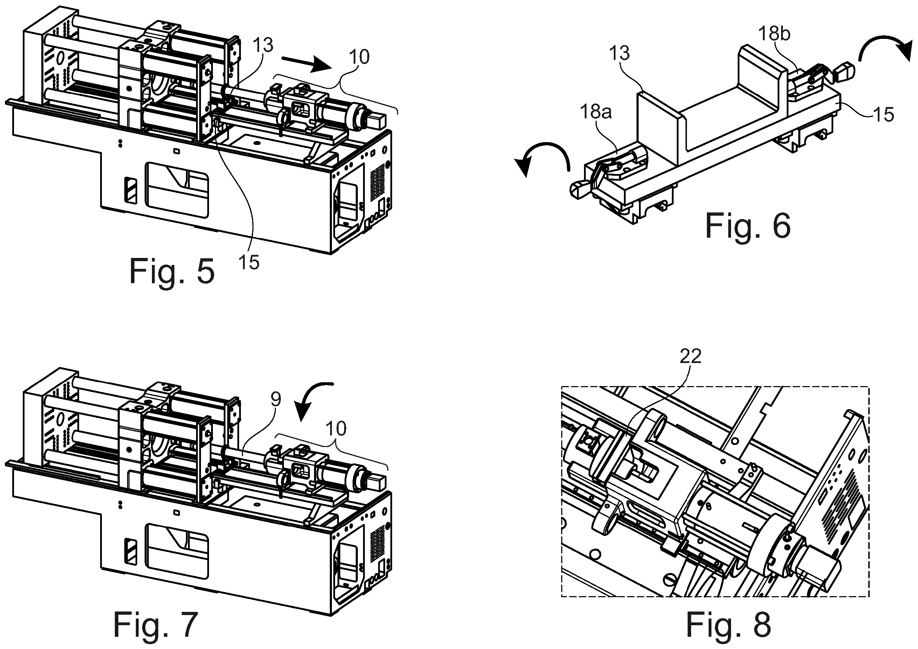

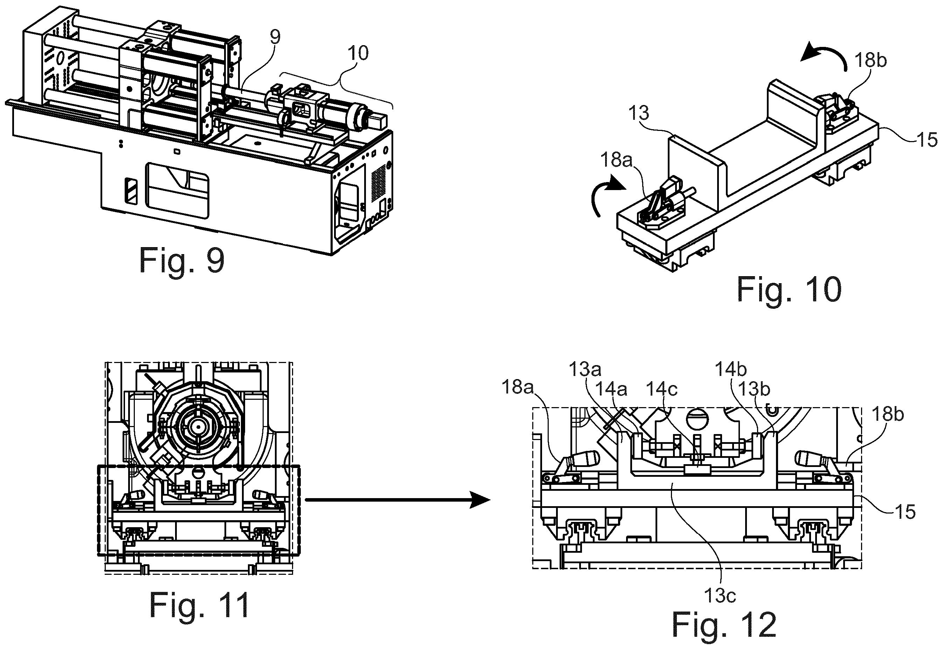

Anhand der Figuren 5 bis 12 soll das Vorgehen beim ersten Einrichten der Plastifiziereinheit erläutert werden:
► Schritt 1 (Figuren 5 und 6):
   Die Antriebseinheit 10 wird in eine hintere Position verfahren und die Spannelemente 18a und 18b sind in geöffneter Stellung. Ein Fixierelement 13 kann auf der Trägerplatte 15 zwischen den Spannelementen aufgesetzt werden, wobei ein gewisses Spiel vorhanden ist.
► Schritt 2 (Figuren 7 und 8):
   Die Plastifiziereinheit 9 wird eingebaut, wobei das hintere Ende der Plastifiziereinheit 9 mittels eines Spannkeils 22 mit der Antriebseinheit 10 verbunden wird.
► Schritt 3 (Figuren 9 und 10):
   Die Spannelemente 18a und 18b werden in die geschlossene Position gebracht.
► Schritt 4 (Figuren 11 und 12):
   Mittels der Stelleelemente 14a, 14b und 14c wird die relative Position des Tragelements 12 gegenüber dem Fixierelement 13 verändert und zwar in der Weise, dass die Düsenmitte richtig eingestellt ist. Diese Einstellung muss je Plastifiziereinheit einmalig vorgenommen werden.

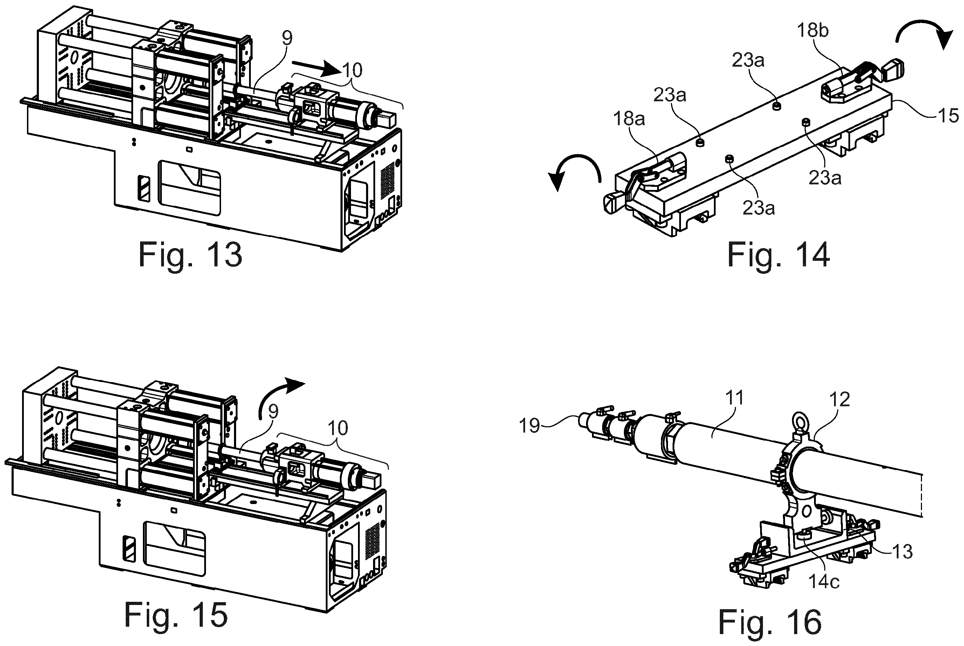

Anhand der Figuren 13 bis 16 soll das Vorgehen beim Ausbau einer Plastifiziereinheit zwecks Austauschs gegen eine andere Plastifiziereinheit erläutert werden.
► Schritt 1 (Figuren 13 und 14):
   Die gesamte Spritzeinheit wird in eine hintere Position verfahren und die Spannelemente 18a und 18b werden von der geschlossenen Stellung in eine geöffnete Stellung gebracht. Dadurch wird das Fixierelement 13 und damit die Plastifiziereinheit in diesem Bereich freigegeben.
► Schritt 2 (Figuren 15 und 16):
   Der Spannkeil 22 wird gelöst und damit die Plastifiziereinheit 9 von der Antriebseinheit 10 freigegeben. Nunmehr kann die Plastifiziereinheit 9 als Ganzes von der Spritzgießmaschine entfernt werden, wobei das Fixierelement 13 über die Stellelemente 14a, 14b, 14c mit der Plastifiziereinheit 9 verbunden bleibt und zusammen mit dieser ausgebaut wird. Beim erneuten Einbau der Plastifiziereinheit 9 mit Fixierelement 13 wird durch einfaches Schließen der Spannelemente 18a und 18b die Düsenmitte automatisch eingestellt.

### Bezugszeichenliste

- 1: Maschinenbett
- 2: Schließeinheit
- 3: Spritzeinheit
- 4: Feststehende Formaufspannplatte
- 5: Bewegliche Formaufspannplatte
- 6: Schließzylinder
- 7: Säulen
- 8: Stützplatten
- 9: Plastifiziereinheit
- 10: Antriebseinheit
- 11: Zylinder
- 12: Tragelement
- 13: Fixierelement
- 13a: Erstes Seitenteil des Fixierelements 13
- 13b: Zweites Seitenteil des Fixierelements 13
- 13c: Bodenteil des Fixierelements 13
- 14a: Erstes Stellelement
- 14b: Zweites Stellelement
- 14c: Drittes Stellelement
- 15: Trägerplatte
- 16a: Erster Führungswagen
- 16b: Zweiter Führungswagen
- 17a: Erste Führungsschiene
- 17b: Zweite Führungsschiene
- 18a: Erstes Spannelement
- 18b: Zweites Spannelement
- 19: Düse
- 20: Spannbolzen
- 21: Spannhebel
- 22: Spannkeil
- 23a: Führungsstifte
- 23b: Führungsnuten

## Patentansprüche

1. Plastifiziereinheit (9) für eine Spritzeinheit (3) einer Spritzgießmaschine, mit einem Zylinder (11) und einer darin drehbaren und in axialer Richtung bewegbaren Schnecke, mit einem unterhalb des Zylinders (11) angeordneten und mit diesem verbundenen Tragelement (12), und mit einem Fixierelement (13), welches das dem Zylinder (11) abgewandte Ende des Tragelements (12) umgibt, derart, dass ein Abstand zwischen dem Fixierelement (13) und dem Tragelement (12) vorliegt, wobei zwischen dem Fixierelement (13) und dem Tragelement (12) mehrere Stellelemente (14a, 14b, 14c) vorgesehen sind, welche dazu ausgebildet sind, eine kraft- und/oder formschlüssige Verbindung zwischen dem Fixierelement (13) und dem Tragelement (12) erzeugen und die Position des Tragelements (12) relativ zu dem Fixierelement (13) in einer Ebene orthogonal zur Zylinderachse einstellen zu können, wobei drei Stellelemente (14a, 14b, 14c) vorgesehen sind, wobei ein erstes Stellelement (14c) mit seiner Symmetrieachse in der vertikalen und die Zylinderachse enthaltenden Ebene liegt, wobei dieses erste Stellelement (14c) unterhalb des Tragelements (12) angeordnet und für eine Einstellung der Position des Tragelements (12) relativ zu dem Fixierelement (13) in vertikaler Richtung ausgebildet ist, wobei zwei weitere Stellelemente (14a, 14b) vorgesehen sind, deren Symmetrieachsen in einer vertikalen Ebene liegen, welche orthogonal zur Zylinderachse liegt, wobei auf jeder Seite der vertikalen und die Zylinderachse enthaltenden Ebene jeweils eines der zwei weiteren Stellelemente (14a, 14b) angeordnet und für eine Einstellung der Position des Tragelements (12) relativ zu dem Fixierelement (13) in horizontaler Richtung ausgebildet ist.

2. Plastifiziereinheit nach Anspruch 1,
**dadurch gekennzeichnet, dass**
die Symmetrieachsen aller drei Stelleelemente (14a, 14b, 14c) in einer Ebene orthogonal zur Zylinderachse angeordnet sind.

3. Plastifiziereinheit nach Anspruch 1 oder 2,
**dadurch gekennzeichnet, dass**
die Symmetrieachsen der zwei weiteren Stellelemente (14a, 14b) auf einer gemeinsamen Achse liegen.

4. Plastifiziereinheit nach einem der vorstehenden Ansprüche,
**dadurch gekennzeichnet, dass**
das Fixierelement (12) im Wesentlichen einen rechteckförmigen und nach oben offenen Querschnitt (U-förmiger Querschnitt) aufweist, und dass das Fixierelement (13) mit seinen Seitenwänden (13a, 13b) zwischen Spannelementen (18a, 18b) eines Spann- und Positioniersystems einspannbar ist.

5. Spritzeinheit mit einer Plastifiziereinheit (9) nach einem der vorstehenden Ansprüche und mit einer Antriebseinheit (10), umfassend einen Dreh- und einen Linearantrieb für die Schnecke, wobei die Plastifiziereinheit (9) lösbar mit der Antriebseinheit (10) verbindbar oder verbunden ist,
**dadurch gekennzeichnet, dass**
eine Trägerplatte (15) vorgesehen ist, auf der das Fixierelement (13) abstützbar ist und auf der ein Spann- und Positioniersystem (18a, 18b) vorgesehen ist, welches dazu ausgebildet ist, das auf der Trägerplatte (15) abgestützte Fixierelement (13) einzuspannen und in seiner Lage zu fixieren.

6. Spritzeinheit nach Anspruch 5,
**dadurch gekennzeichnet, dass**
eine Linearführung (16a, 16b, 17a, 17c) für die Trägerplatte (15) vorgesehen ist, wobei vorzugsweise zwei voneinander beabstandete Führungsschienen (17a, 17b) mit einem geeigneten Querschnitt und hierzu passenden Führungswagen (16a, 16b) vorgesehen sind, wobei die Führungswagen (16a, 16b) an der Unterseite der Trägerplatte (15) befestigt sind.

7. Spritzeinheit nach Anspruch 5 oder 6,
**dadurch gekennzeichnet, dass**
zwischen der Trägerplatte (15) einerseits und der Unterseite des Fixierelements (13) andererseits Führungselemente (23a, 23b) vorgesehen sind, die derart ausgebildet sind und zusammenwirken, dass das Fixierelement (13) in Längsrichtung der Spritzeinheit (3) lagefixiert und orthogonal zur Zylinderachse auf der Trägerplatte (15) verschiebbar ist.

8. Spritzgießmaschine mit einem Maschinenbett (1), einer Schließeinheit (2) und einer Spritzeinheit (3) nach einem der Ansprüche 5 bis 7, wobei die Trägerplatte (15) in Maschinenlängsrichtung verschiebbar auf oder in dem Maschinenbett abgestützt ist, vorzugsweise mittels geeigneter Linearführungen (16a, 16b, 17a, 17b).

## Claims

1. A plasticizing unit (9) for an injection unit (3) of an injection moulding machine, with a cylinder (11) and with a screw, rotatable therein and movable in axial direction, with a support element (12) arranged beneath the cylinder (11) and connected therewith, and with a fixing element (13), which surrounds the end of the support element (12) facing away from the cylinder (11), in such a way that a distance is present between the fixing element (13) and the support element (12), wherein between the fixing element (13) and the support element (12) several adjusting elements (14a, 14b, 14c) are provided, which are configured to be able to produce a force-fitting and/or form-fitting connection between the fixing element (13) and the support element (12) and to adjust the position of the support element (12) relative to the fixing element (13) in a plane orthogonally to the cylinder axis, wherein
three adjusting elements (14a, 14b, 14c) are provided, wherein a first adjusting element (14c) lies with its symmetry axis in the plane which is vertical and containing the cylinder axis, wherein this first adjusting element (14c) is arranged beneath the support element (12) and is configured for an adjusting of the position of the support element (12) relative to the fixing element (13) in vertical direction, wherein two further adjusting elements (14a, 14b) are provided, the symmetry axes of which lie in a vertical plane, which lies orthogonally to the cylinder axis, wherein on each side of the plane which is vertical and containing the cylinder axis respectively one of the two further adjusting elements (14a, 14b) is arranged and is configured for an adjusting of the position of the support element (12) relative to the fixing element (13) in horizontal direction.

2. The plasticizing unit according to Claim 1,
**characterized in that**
the symmetry axes of all three adjusting elements (14a, 14b, 14c) are arranged in a plane orthogonally to the cylinder axis.

3. The plasticizing unit according to Claim 1 or 2,
**characterized in that**
the symmetry axes of the two further adjusting elements (14a, 14b) lie on a common axis.

4. The plasticizing unit according to one of the preceding claims,
**characterized in that**
the fixing element (12) has substantially a rectangular and upwardly open cross-section (U-shaped cross-section), and that the fixing element (13) is able to be clamped with its side walls (13a, 13b) between clamping elements (18a, 18b) of a clamping- and positioning system.

5. An injection unit with a plasticizing unit (9) according to one of the preceding claims and with a drive unit (10), comprising a rotary- and a linear drive for the screw, wherein the plasticizing unit (9) is detachably connectable or connected with the drive unit (10),
**characterized in that**
a carrier plate (15) is provided, on which the fixing element (13) is able to be supported and on which a clamping- and positioning system (18a, 18b) is provided, which is configured to clamp the fixing element (13), supported on the carrier plate (15), and to fix it in its position.

6. The injection unit according to Claim 5,
**characterized in that**
a linear guide (16a, 16b, 17a, 17c) is provided for the carrier plate (15), wherein preferably two guide rails (17a, 17b), spaced apart from one another, having a suitable cross-section and guide carriages (16a, 16b) matching hereto are provided, wherein the guide carriages (16a, 16b) are fastened on the underside of the carrier plate (15).

7. The injection unit according to Claim 5 or 6,
**characterized in that**
between the carrier plate (15) on the one hand and the underside of the fixing element (13) on the other hand, guide elements (23a, 23b) are provided, which are configured and interact in such a way that the fixing element (13) is fixed in position in longitudinal direction of the injection unit (3) and is displaceable orthogonally to the cylinder axis on the carrier plate (15).

8. An injection moulding machine with a machine bed (1), a clamping unit (2) and an injection unit (3) according to one of Claims 5 to 7, wherein the carrier plate (15) is supported displaceably in longitudinal direction of the machine on or in the machine bed, preferably by means of suitable linear guides (16a, 16b, 17a, 17b).

## Revendications

1. Unité de plastification (9) pour une unité d'injection (3) d'une machine de moulage par injection, avec un cylindre (11) et une vis sans fin pouvant tourner dedans et mobile dans la direction axiale, avec un élément de support (12) disposé en dessous du cylindre (11) et relié à celui-ci et avec un élément de fixation (13), lequel entoure l'extrémité de l'élément de support (12) opposée au cylindre (11) de telle manière qu'un intervalle existe entre l'élément de fixation (13) et l'élément de support (12), sachant qu'entre l'élément de fixation (13) et l'élément de support (12) sont prévus plusieurs éléments de réglage (14a, 14b, 14c), lesquels sont constitués pour produire une liaison par conformité de force et/ou de forme entre l'élément de fixation (13) et l'élément de support (12) et pouvoir régler la position de l'élément de support (12) par rapport à l'élément de fixation (13) dans un plan orthogonalement à l'axe du cylindre,
sachant que
trois éléments de réglage (14a, 14b, 14c) sont prévus, sachant qu'un premier élément de réglage (14c) se situe avec son axe de symétrie dans le plan vertical et contenant l'axe de cylindre, sachant que ce premier élément de réglage (14c) est disposé en dessous de l'élément de support (12) et est constitué pour un réglage de la position de l'élément de support (12) par rapport à l'élément de fixation (13) dans la direction verticale, sachant que deux autres éléments de réglage (14a, 14b) sont prévus, dont les axes de symétrie se situent dans un plan vertical, lequel se situe orthogonalement à l'axe de cylindre, sachant que sur chaque côté du plan vertical et contenant l'axe de cylindre est respectivement disposé un des deux autres éléments de réglage (14a, 14b) et est constitué pour un réglage de la position de l'élément de support (12) par rapport à l'élément de fixation (13) dans la direction horizontale.

2. Unité de plastification selon la revendication 1,
**caractérisée en ce que**
les axes de symétrie des trois éléments de réglage (14a, 14b, 14c) sont disposés dans un plan orthogonalement à l'axe de cylindre.

3. Unité de plastification selon la revendication 1 ou 2,
**caractérisée en ce que**
les axes de symétrie des deux autres éléments de réglage (14a, 14b) se situent sur un axe commun.

4. Unité de plastification selon l'une quelconque des revendications précédentes,
**caractérisée en ce que**
l'élément de fixation (12) comporte pour l'essentiel une section rectangulaire et ouverte vers le haut (section en forme de U) et **en ce que** l'élément de fixation (13) peut être serré avec ses parois latérales (13a, 13b) entre des éléments de serrage (17a, 18b) d'un système de serrage et de positionnement.

5. Unité de d'injection avec une unité de plastification (9) selon l'une quelconque des revendications précédentes et avec une unité d'entraînement (10), comprenant un entraînement rotatif et un entraînement linéaire pour la vis sans fin, sachant que l'unité de plastification (9) peut être reliée ou est reliée de façon amovible à l'unité d'entraînement (10),
**caractérisée en ce qu'**
un plateau de support (15) est prévu sur lequel l'élément de fixation (13) peut être appuyé et sur lequel est prévu un système de serrage et de positionnement (18a, 18b), lequel est constitué pour serrer et fixer dans sa position l'élément de fixation (13) appuyé sur le plateau de support (15).

6. Unité d'injection selon la revendication 5,
**caractérisée en ce qu'**
un guidage linéaire (16a, 16b, 17a, 17c) est prévu pour le plateau de support (15), sachant de préférence que deux rails de guidage (17a, 17b) à distance l'un de l'autre avec une section appropriée et des chariots de guidage s'adaptant à celle-ci (16a, 16b) sont prévus, sachant que les chariots de guidage (16a, 16b) sont fixés à la face inférieure du plateau de support (15).

7. Unité de d'injection selon la revendication 5 ou 6,
**caractérisée en ce qu'**
entre le plateau de support (15) d'une part et la face inférieure de l'élément de fixation (13) d'autre part, sont prévus des éléments de guidage (23a, 23b), qui sont constitués et coopèrent de telle manière que l'élément de fixation (13) est fixé en position dans la direction longitudinale de l'unité d'injection (3) et peut être déplacé orthogonalement à l'axe cylindrique sur le plateau de support (15).

8. Machine de moulage par injection avec un banc de machine (1), une unité de fermeture (2) et une unité d'injection (3) selon l'une quelconque des revendications 5 à 7, sachant que le plateau de support (15) est appuyé sur ou dans le banc de machine pouvant être déplacé dans la direction longitudinale de machine, de préférence au moyen de guidages linéaires appropriés (16a, 16b, 17a, 17b).
